# EUROPEAN PATENT SPECIFICATION

(11) **EP 2 927 480 B1**
(45) Date of publication and mention of the grant of the patent: **16.11.2016**
(21) Application number: 14382125.4
(22) Date of filing: 31.03.2014
(51) Int. Cl.: F03D 1/00, F03D 1/06

(54) **Wind turbine rotor rotation**
Windturbinenrotordrehung
Rotation du rotor d'éolienne

(43) Date of publication of application: 07.10.2015
(73) Proprietor: Alstom Renovables España, S.L., 08005 Barcelona (ES)
(72) Inventor: PALOMARES RENTERO, Pedro, 08005 BARCELONA (ES); LÁZARO, Ricardo, 08017 BARCELONA (ES); PRATS MUSTARÓS, Josep, 08001 BARCELONA (ES); CANEDO PARDO, Santiago, 08037 BARCELONA (ES)
(74) Representative: ZBM Patents - Zea, Barlocci & Markvardsen

(56) References cited:
- EP-A1- 2 594 787
- EP-A2- 1 167 754
- EP-A2- 2 116 722
- DE-A1- 10 334 448
- DE-A1-102011 114 247

## Description

The present disclosure relates to methods of rotating a wind turbine rotor in direct drive wind turbines.

### BACKGROUND

Modern wind turbines are commonly used to supply electricity into the electrical grid. Wind turbines generally comprise a rotor with a rotor hub and a plurality of blades. The rotor is set into rotation under the influence of the wind on the blades. The rotation of the rotor shaft drives the generator rotor either directly ("directly driven") or through the use of a gearbox. The gearbox (if present), the generator and other systems are usually mounted in a nacelle on top of a wind turbine tower.

When wind turbines are erected, the tower is generally constructed first. Then the nacelle, which usually contains the generator and the gearbox (if present) is usually mounted on top of the tower. Then, the hub may be hoisted and mounted. Finally, the blades are hoisted one by one from a ground level towards the rotor hub and mounted therein. In alternative methods, one or more blades may be pre-assembled with the hub when lifting the hub.

The blades may be installed in a variety of ways, e.g. in a substantially vertical manner or substantially horizontally or at other inclined angles. Particularly, in offshore wind turbines, mounting a blade from above the hub may be very complicated, or at least requires an enormous crane and jack-up barge. Such an installation method may thus be very expensive and, depending on the depth of the sea, may simply be impossible.

It is known to hoist a complete rotor assembly, i.e. the hub with blades, and mount it to e.g. the nacelle. But in order to mount a complete rotor assembly, a large surface area is required, which is not available in the case of offshore wind turbines.

It is further known to mount an incomplete rotor assembly on the nacelle, e.g. the hub with two blades and subsequently, mount the remaining blade. In these cases, the rotor with the two blades is normally mounted with the two blades pointing upwards, i.e. "bunny ears" configuration. There is thus no need for rotating the wind turbine rotor as the third blade could be vertically mounted from below. However, in order to be able to perform this, the prevailing wind speed has to be below a predetermined value for a prolonged period time. The period of time depends on the expected length of the installation step and a safety factor to be taken into account.

During certain seasons, windows of several hours in which the wind does not reach the predetermined value may not be available very often. In practice, this may mean that personnel and maintenance equipment including e.g. expensive cranes and jack-up barges may be in stand-by during days or even weeks. This represents an enormous cost.

It is known to mount each of the plurality of blades substantially horizontally or substantially vertically. This means that individual installation steps may require less time and may be performed at higher winds, thus increasing the time windows available for installation. However, such methods require rotation of the hub between the mounting of one blade and another. In order to correctly position the hub, torque is required for rotating the wind turbine rotor after mounting one blade in order to mount the next one. When not all blades have been mounted onto the hub, the hub is not balanced, so that the weight of one or more blades has to be carried upwards when rotating the hub. The corresponding torque may thus be very high.

The torque may be delivered using the gearbox (when present) with an external power supply for rotating the rotor. Such a system may be used in combination with a locking pin for maintaining the rotor in a desired position for installation. This is not possible in case of directly driven wind turbines as no gearbox is provided between rotor and generator. Even though the generator may be suitable for operating as a motor, it will generally not be able to deliver the required torque to rotate the hub, especially when the hub is unbalanced, i.e. when at least one blade, but not all the blades have been mounted. A direct drive wind turbine with an auxiliary generator is known from EP 2 594 787.

It is an object of the present disclosure to provide methods of rotating a wind turbine rotor in direct drive wind turbines that at least partially reduce one or more of the aforementioned drawbacks leading to improved methods of installing wind turbine blades especially suitable for direct drive wind turbines and offshore direct drive wind turbines.

### SUMMARY

In a first aspect, a method of rotating a wind turbine rotor in a direct drive wind turbine is provided. The direct drive wind turbine comprises a generator with a generator rotor and a generator stator and the wind turbine rotor comprises a hub rotatably mounted on a frame extending forward into the hub. The method comprises providing an auxiliary driving system having a fixed part connected to the frame extending forward into the hub and a rotatable part operatively coupled to the hub and activating the auxiliary driving system such that the rotatable part rotates the hub.

According to this aspect, the auxiliary driving system provides the required torque able to rotate the hub. With the provision of such an auxiliary driving system any required installation position of the rotor hub can be achieved. The blades may thus be mounted one by one, at higher wind speeds. More time windows for such installations may thus be available, thus shortening installation time and reducing installation cost.

Furthermore, a direct drive wind turbine having a frame extending forward into the hub takes advantage of the fact that a rigid structure, i.e. the frame extending forward into the hub, can be used either to support or even to accommodate the fixed part of the auxiliary driving system. This way an element already present in the system is used as supporting structure and no additional permanent elements are required. Moreover, after the blades are installed the auxiliary driving system can be dismantled and no extra components, i.e. no extra weight is added to the wind turbine rotor.

According to another aspect, a method of installing a blade in a direct drive wind turbine is provided, wherein the method comprises rotating the hub around its axis of rotation into a predetermined position using the method substantially as hereinbefore described. Once the hub is put in the required position, the blade may be hoisted and fitted to the hub. This operation may be done for each blade. This way, the installation of blades in a direct drive wind turbine may be performed in quite a simple manner.

According to a further aspect, a wind turbine rotor for a direct drive wind turbine is provided. The rotor may comprise a hub rotatably mounted on a frame extending forward into the hub and a plurality of blades, wherein a distal end of the frame may comprise a machined gear-shaped coupling. The machining allows fitting e.g. a fixed part of the auxiliary driving system substantially as hereinbefore described to the frame at the same time as it prevents relative movements between the fixed part and the frame.

According to a still further aspect a direct drive wind turbine comprising a wind turbine rotor substantially as hereinbefore described is provided.

### BRIEF DESCRIPTION OF THE DRAWINGS

Non-limiting examples of the present disclosure will be described in the following with reference to the appended drawings, in which:
Figure 1 shows a schematic partial cross-sectional view of an example of a wind turbine hub with an auxiliary driving system according to an implementation;
Figure 2 shows a frontal view of the example of the auxiliary driving system of figure 1;
Figure 3 shows a schematic cross-sectional view of an example of a wind turbine hub with an auxiliary driving system according to another implementation;
Figures 4 shows a perspective view of a wind turbine hub with an auxiliary driving system according to a further example;
Figure 5 shows a partial view of figure 4;
Figure 6 shows a rear view of the auxiliary driving system of figure 4;
Figure 7 shows a cross-sectional view of a wind turbine hub with an auxiliary driving system according to a still further example; and
Figure 8 shows a frame for extending forward into a wind turbine hub according to an example.

### DETAILED DESCRIPTION OF EXAMPLES

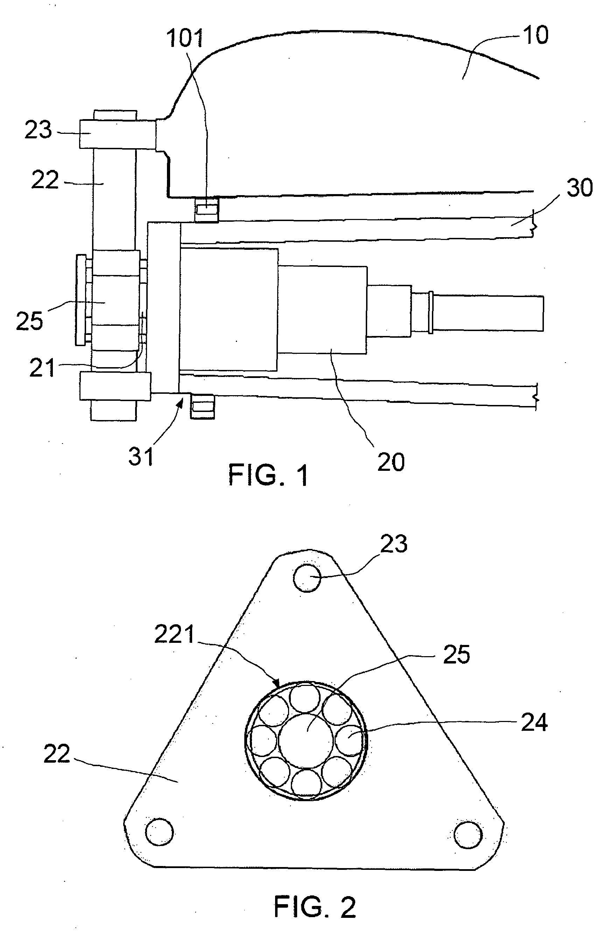

Figure 1 shows a schematic cross-sectional view of a hub portion of a wind turbine according to an example. The hub 10 may be rotatably mounted on a frame 30 extending forward into the hub 10. The hub 10 may thus substantially surround the frame 30. The frame 30 extending forward into the hub 10 may completely traverse the hub 10 and its distal end 31 may be in front of the hub 10.

The hub 10 may be rotatably mounted on the frame 30 extending forward into the hub by suitable bearings 101 arranged at a front end and a rear end of the hub 10 (only the bearing provided at the front end of the hub is shown). In this example, two bearings may enable rotation of the rotor hub on the frame. Different kinds of bearings and bearing arrangements may however be used in further examples.

In the example of figure 1, a single motor-gearbox unit may be provided. A housing of the motor-gearbox unit 20 may be fitted inside the frame 30 extending forward into the hub 10. In this example the gearbox may comprise four stages however other gearboxes may be foreseen depending on the motor used and the torque required. An output shaft 21 of the motor-gearbox unit 20 may be operatively coupled to a carrier, in this example a disc 22 that may be connected to the hub 10 by e.g. pins 23. In figure 2 three pins 23 may be provided between the disc 22 and the hub 10 but other number of pins or other ways of attaching the disc to the hub may also be foreseen.

Figure 2 shows a frontal view of this arrangement in which the hub has been deleted to more clearly show the motor-gearbox unit-disc arrangement. The disc 22 may comprise a rounded aperture 221 provided with an annular gear and planet gears 24. A pinion 25 mounted on the output shaft 21 can mesh with planet gears 24, so that rotation of the pinion 25 can lead to rotation of the annular gear integrated in disc 22. Other ways of transmitting rotation to the disc may also be foreseen. Since the disc 22 is connected to the hub 10, rotation of the disc 22 rotates the hub 10. In the example of figure 2, the disc has a triangular shape, but other alternative shapes may also be foreseen as long as it is able to support the portion of the auxiliary driving system it serves to support. Other alternatives may comprise square, rectangular, any other polygonal or even circular shape.

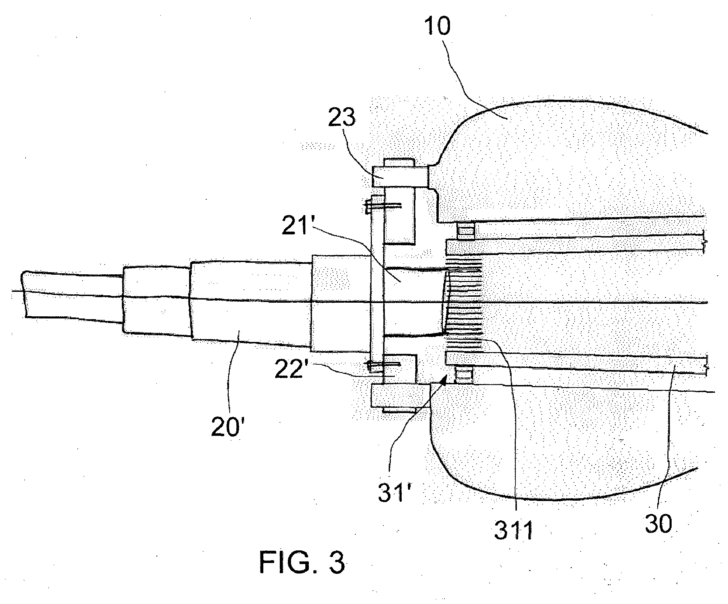

Figure 3 shows a partial cross-sectional view of a wind turbine hub 10 with an auxiliary driving system according to another example. This example differs from that of figures 1 and 2 in that the housing of the motor-gearbox unit 20' may be mounted on a disc 22' that may be connected to the hub 10 by e.g. pins 23 and the output shaft 21' may be fixed to a distal end 31' of the frame extending forward into the hub. In this example, an inner surface of the frame distal end 31' may be provided with a machined coupling 311 in order to interlock with a distal end of the output shaft 21'. The distal end of the output shaft 21' may carry an element for interlocking with the machined coupling 311 in the frame. Such an element may e.g. be star-shaped or gear-shaped, and the frame may have an internal shape complementary to such an element.

In the examples of figures 1 - 3, the inclusion of a gearbox makes it possible to have a motor of smaller dimensions and still be able to provide the torque to a rotor hub that may be required during installation, when e.g. one blade has already been mounted to the hub. The motor may e.g. be an electric or hydraulic motor.

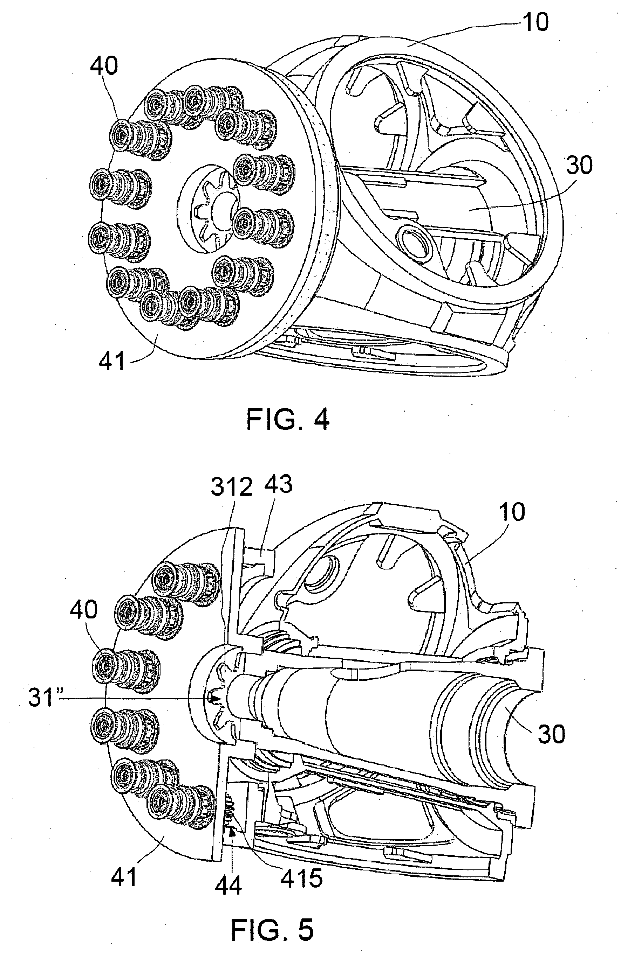

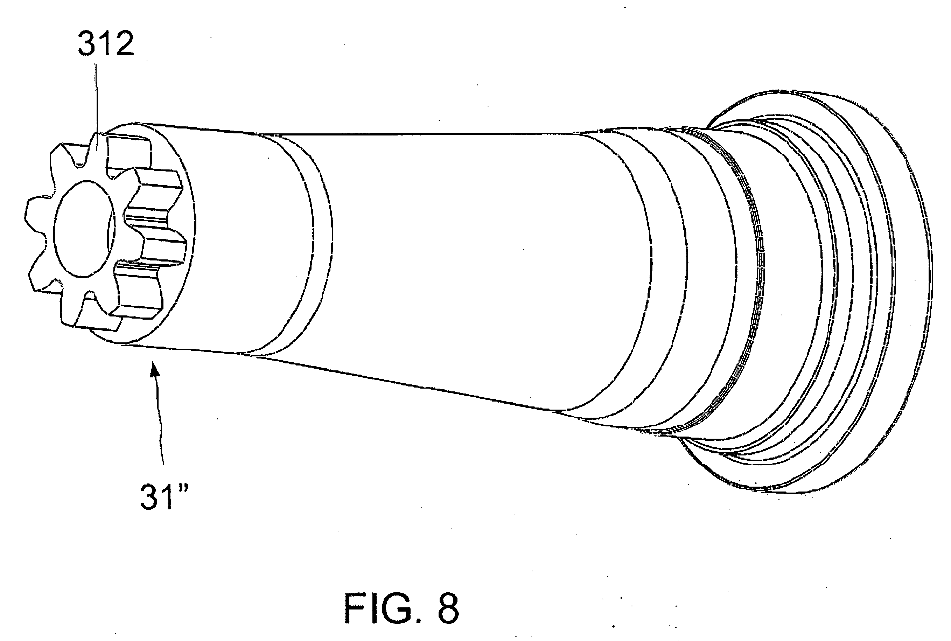

Figure 4 shows a perspective view of a wind turbine hub and an auxiliary driving system according to a further example. This example differs from the previous examples in that the auxiliary driving system may comprise a plurality of motor-gearbox units 40. In this example, the plurality of motor-gearbox units may be mounted on a disc 41 that may be connected to a distal end of the frame 30 extending forward into the hub 10. In order to aid in this connection a distal end 31" (see figure 8) of the frame may comprise a gear shaped coupling 312 or any other machined coupling for interlocking with a central portion of the disc 41. The central portion of the disc 41 may have a complementary shape in order to secure its assembly. In this example, the disc may have a circular shape, but other alternative shapes may also be foreseen as long as it is able to support the portion of the auxiliary driving system it serves to support. Other alternatives may comprise square, rectangular or any other polygonal shape.

In this example, a support 43 (see figure 5) fixed to the hub 10 may comprise an annular gear 44 arranged to mesh with drive pinions 415 of each motor-gearbox unit 40. This way, rotation of the pinions 415 is transmitted to the hub 10 through the annular gear 44 and the support 43. Although in this example, twelve motor-gearbox units may be provided, other number of units may be foreseen depending on the power of the motors and the required torque.

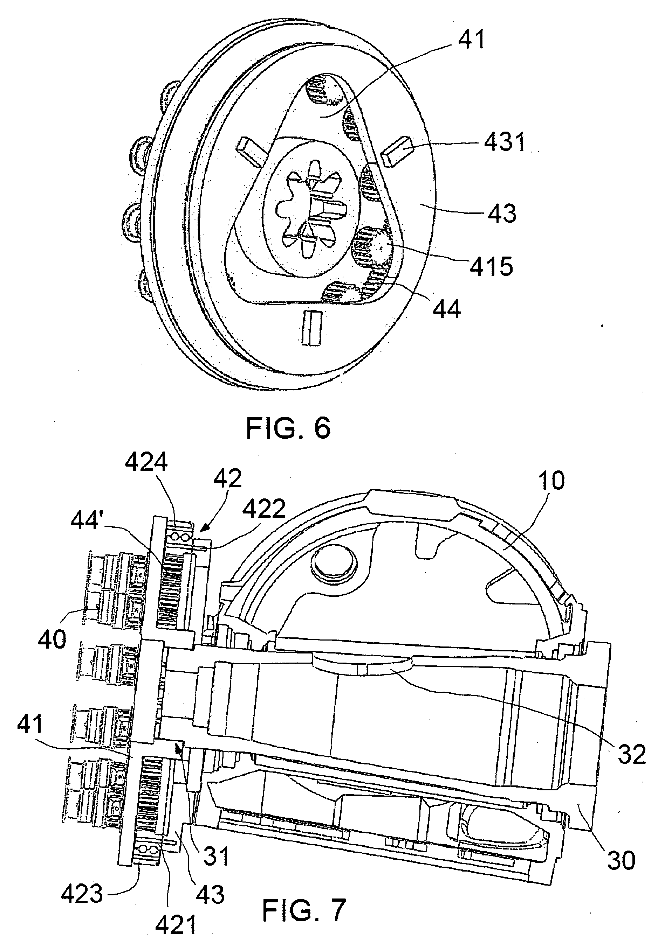

Figure 6 shows a rear view of the auxiliary driving system of figure 5. In this example, the support 43 comprises three protrusions 431 in order to be fitted in three notches or complementary protrusions provided in the hub. Alternative ways of connecting the support to the hub may also be foreseen e.g. screws or bolts.

Figure 7 shows an auxiliary driving system according to a still further example that differs from that of figures 4 and 5 in that a bearing 42 may further be provided between the support 43 fixed to the hub 10 and the disc 41 carrying the plurality of motor-gearbox units 40 such that an inner bearing ring 421 is fixed to the support 43 by bolts or screws 422 and an outer bearing ring 423 is fixed to the disc 41 by further bolts or screws 424.

In this example, the gear 44' may be provided on an inner side of the inner bearing ring 421 such that the pinions driven by the motor-gearbox units 40 can mesh with the gear 44'. This way, rotation of the drive pinions is transmitted to the hub 10 through the gear 44', the inner bearing ring 421 and the support 43. The rear view of the support 43 of figure 7 may be similar to that shown in figure 6.

In the example of figures 4 - 7, the torque required during installation can be delivered by the plurality of motor-gearbox units. Each of the motors may thus be relatively small, e.g. of dimensions and power of a pitch motor. The motors may e.g. be electric or hydraulic motors.

Figure 8 shows an example of a frame that may be used with auxiliary driving systems as hereinbefore described. A frame distal end 31" may comprise a coupling in the shape of a gear 312 attached to or machined on its outer surface. In alternative examples, the frame's distal end may comprise other machined couplings and/or even a machined coupling along an inner surface, as explained in connection with figure 3.

In all examples, the hub may be rotatably mounted on a frame extending forward into the hub. The frame extending forward into the hub may completely traverse the hub and its distal end may be in front of the hub. The frame extending forward into the hub may have a tapered or cylindrical shape.

In some examples, instead of a machined coupling provided on a distal end of the frame, a separate coupling may be foreseen made of the same or a different material than that of the frame. In these cases the coupling may be fixed to the distal end of the frame by e.g. welding, screws/bolts or shrink-fitting.

In some examples, the frame extending forward into the hub may comprise an aperture 32 (see figure 6) arranged in its upper side for accessing an inside portion of the hub. The provision of the aperture in the upper side of the frame may facilitate the ergonomics of access to and exit from the hub, both for equipment and for personnel; e.g. evacuation of an injured person using e.g. a stretcher that can be placed just below the aperture may be facilitated.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A method of rotating a hub to achieve a required installation position of the hub of a wind turbine rotor in a direct drive wind turbine comprising a generator with a generator rotor and a generator stator, wherein the hub is rotatably mounted on a frame extending forward into the hub and the method comprises
providing an auxiliary driving system having a fixed part connected to the frame extending forward into the hub and a rotatable part operatively coupled to the hub; and
activating the auxiliary driving system such that the rotatable part of the auxiliary driving system rotates the hub to achieved the required installation position.

2. A method according to claim 1, wherein the auxiliary driving system comprises a single motor-gearbox unit having an output shaft, the rotatable part being one of a housing of the motor-gearbox unit or the output shaft of the motor-gearbox unit and the fixed part being the other of the housing of the motor-gearbox unit and the output shaft of the motor-gearbox.

3. A method according to claim 1, wherein the auxiliary driving system comprises a plurality of motor-gearbox units having a motor, a gearbox, an output shaft and a drive pinion mounted on the output shaft and the method comprises,
mounting the plurality of motor-gearbox units on a carrier that is connected to the frame extending forward into the hub,
providing a gear in a support structure fixed to the hub,
providing meshing engagement of the drive pinions of the motor-gearbox units with the gear.

4. A method according to claim 3, further providing a bearing between the carrier and the support structure arranged such that the gear is provided on an inner bearing ring; the inner bearing ring being fixed to the hub and an outer bearing ring being fixed to the carrier.

5. A method according to claim 3 or claim 4, wherein a distal end of the frame has a coupling region for interlocking with a coupling region of the carrier.

6. A method according to claim 2, wherein the housing of the motor-gearbox unit is fitted inside the frame extending forward into the hub and the output shaft is operatively coupled to a carrier fixed to the hub.

7. A method according to claim 2, wherein the housing of the motor-gearbox unit is mounted on a carrier that is fixed to the hub and the output shaft is fixed to the frame extending forward into the hub.

8. A method according to claim 7, wherein a distal end of the frame extending has a coupling region for interlocking with a coupling region of the output shaft.

9. A method according to claim 5 or claim 8, wherein the coupling region of the frame is machined into the frame.

10. A method of installing a blade in a direct drive wind turbine comprising a generator with a generator rotor and a generator stator arranged in a wind turbine nacelle, a wind turbine rotor having a hub rotatably mounted on a frame extending forward into the hub and the method comprises rotating the hub around its axis of rotation into a predetermined position with a method according to any of claims 1 - 9.

11. A method according to claim 10, wherein the predetermined position corresponds to a position in which a blade can be mounted in a substantially horizontal manner.

12. A wind turbine rotor for a direct drive wind turbine comprising a hub rotatably mounted on a frame extending forward into the hub and a plurality of blades, wherein a distal end of the frame extending forward into the hub comprises a machined gear-shaped coupling suitable for performing the method of any of claims 1-11.

13. A direct drive wind turbine comprising a wind turbine rotor according to claim 12.

## Patentansprüche

1. Ein Verfahren zur Drehung einer Nabe, um eine erforderliche Einbauposition der Nabe eines Windturbinenrotors in einer Direktantriebswindturbine umfassend einen Generator mit einem Generatorrotor und einem Generatorstator zu erreichen, wobei die Nabe drehbar auf einem sich nach vorne in die Nabe hinein erstreckenden Rahmen montiert ist und das Verfahren folgendes umfasst
das Bereitstellen von einem Hilfsantriebssystem, das ein mit dem sich nach vorne in die Nabe hinein erstreckenden Rahmen verbundenes festes Teil und ein betriebsfähig mit der Nabe gekoppeltes drehbares Teil hat; und
das Aktivieren des Hilfsantriebssystems, so dass das drehbare Teil des Hilfsantriebssystems die Nabe dreht, um die erforderliche Einbauposition zu erreichen.

2. Ein Verfahren nach Anspruch 1, wobei das Hilfsantriebssystem eine einzelne Antrieb-Getriebe-Einheit umfasst, die eine Abtriebswelle hat, wobei das drehbare Teil eines aus einem Gehäuse der Antrieb-Getriebe-Einheit oder der Abtriebswelle der Antrieb-Getriebe-Einheit ist und das feste Teil das andere aus dem Gehäuse der Antrieb-Getriebe-Einheit und der Abtriebswelle des Antrieb-Getriebes ist.

3. Ein Verfahren nach Anspruch 1, wobei das Hilfsantriebssystem eine Vielzahl von Antrieb-Getriebe-Einheiten umfasst, welche einen Antrieb, ein Getriebe, eine Abtriebswelle und ein auf der Abtriebswelle montiertes Antriebsritzel haben und das Verfahren folgendes umfasst,
das Montieren der Vielzahl von Antrieb-Getriebe-Einheiten auf einem Trägerelement, das mit dem sich nach vorne in die Nabe hinein erstreckenden Rahmen verbunden ist,
das Bereitstellen von einem Getriebe in einer an der Nabe befestigten Tragstruktur,
das Bereitstellen eines einrückenden Eingriffs der Antriebsritzel der Antrieb-Getriebe-Einheiten mit dem Getriebe.

4. Ein Verfahren nach Anspruch 3, weiterhin bereitstellend ein Lager zwischen dem Trägerelement und der Tragstruktur, das so angeordnet ist, dass das Getriebe auf einem inneren Lagerring bereitgestellt ist; wobei der innere Lagerring an der Nabe befestigt ist und ein äußerer Lagerring an dem Trägerelement befestigt ist.

5. Ein Verfahren nach Anspruch 3 oder Anspruch 4, wobei ein distales Ende des Rahmens einen Kupplungsbereich zur Verriegelung mit einem Kupplungsbereich des Trägerelements hat.

6. Ein Verfahren nach Anspruch 2, wobei das Gehäuse der Antrieb-Getriebe-Einheit innerhalb des sich nach vorne in die Nabe hinein erstreckenden Rahmens eingepasst ist und die Abtriebswelle betriebsfähig mit einem an der Nabe befestigten Trägerelement gekoppelt ist.

7. Ein Verfahren nach Anspruch 2, wobei das Gehäuse der Antrieb-Getriebe-Einheit auf einem Trägerelement montiert ist, das an der Nabe befestigt ist und die Abtriebswelle an dem sich nach vorne in die Nabe hinein erstreckenden Rahmen befestigt ist.

8. Ein Verfahren nach Anspruch 7, wobei ein distales Ende des sich erstreckenden Rahmens einen Kupplungsbereich zur Verriegelung mit einem Kupplungsbereich der Abtriebswelle hat.

9. Ein Verfahren nach Anspruch 5 oder Anspruch 8, wobei der Kupplungsbereich des Rahmens in dem Rahmen eingearbeitet ist.

10. Ein Verfahren zur Einbau eines Blattes in einer Direktantriebswindturbine umfassend einen Generator mit einem Generatorrotor und einem Generatorstator, der in einer Windturbinengondel angeordnet ist, einen Windturbinenrotor mit einer drehbar auf einem sich nach vorne in die Nabe hinein erstreckenden Rahmen montierten Nabe und wobei das Verfahren das Drehen der Nabe um deren Drehachse herum in eine vorherbestimmte Position durch ein Verfahren nach einem der Ansprüche 1 - 9 umfasst.

11. Ein Verfahren nach Anspruch 10, wobei die vorherbestimmte Position einer Position entspricht, in welcher ein Blatt im Wesentlichen horizontal montiert werden kann.

12. Ein Windturbinenrotor für eine Direktantriebswindturbine umfassend eine drehbar auf einem sich nach vorne in die Nabe hinein erstreckenden Rahmen montierte Nabe und eine Vielzahl von Blättern, wobei ein distales Ende des sich nach vorne in die Nabe hinein erstreckenden Rahmens eine maschinell bearbeitete getriebeförmige Kupplung umfasst, die zur Durchführung des Verfahrens von einem der Ansprüche 1 - 11 geeignet ist.

13. Eine Direktantriebswindturbine umfassend einen Windturbinenrotor nach Anspruch 12.

## Revendications

1. Un procédé de rotation d'un moyeu pour atteindre une position d'installation requise du moyeu d'un rotor d'éolienne dans une éolienne à entraînement direct comprenant un générateur avec un rotor de générateur et un stator de générateur, dans lequel le moyeu est monté à rotation sur un châssis s'étendant vers l'avant dans le moyeu et le procédé comprend
fournir un système d'entraînement auxiliaire ayant une partie fixe reliée au châssis s'étendant vers l'avant dans le moyeu et une partie pivotante couplée de façon opérationnelle avec le moyeu ; et
activer le système d'entraînement auxiliaire de façon que la partie pivotante du système d'entraînement auxiliaire fait pivoter le moyeu afin d'atteindre la position d'installation requise.

2. Un procédé selon la revendication 1, dans lequel le système d'entraînement auxiliaire comprend une seule unité moteur-boîte de vitesses ayant un arbre de sortie, étant la partie pivotante une parmi un boîtier de l'unité moteur-boîte de vitesses ou l'arbre de sortie de l'unité moteur-boîte de vitesses et étant la partie fixe l'autre parmi le boîtier de l'unité moteur-boîte de vitesses et l'arbre de sortie de l'unité moteur-boîte de vitesses.

3. Un procédé selon la revendication 1, dans lequel le système d'entraînement auxiliaire comprend une pluralité d'unités moteur-boîte de vitesses ayant un moteur, une boîte de vitesses, un arbre de sortie et un pignon d'entraînement monté sur l'arbre de sortie et le procédé comprend,
monter la pluralité d'unités moteur-boîte de vitesses sur un support qui est relié au châssis s'étendant vers l'avant dans le moyeu,
fournir un engrenage dans une structure de support fixée au moyeu,
fournir un contact d'engrènement des pignons d'entraînement des unités moteur-boîte de vitesses avec l'engrenage.

4. Un procédé selon la revendication 3, fournissant en outre un palier entre le support et la structure de support disposé de façon que l'engrenage est fourni sur une bague de palier intérieure ; étant la bague de palier intérieure fixée au moyeu et étant une bague de palier extérieure fixée au support.

5. Un procédé selon la revendication 3 ou revendication 4, dans lequel une extrémité distale du châssis a une région de couplage pour le verrouillage avec une région de couplage du support.

6. Un procédé selon la revendication 2, dans lequel le boîtier de l'unité moteur-boîte de vitesses est installé dans le châssis s'étendant vers l'avant dans le moyeu et l'arbre de sortie est couplé de façon opérationnelle avec un support fixé au moyeu.

7. Un procédé selon la revendication 2, dans lequel le boîtier de l'unité moteur-boîte de vitesses est monté sur un support qui est fixé au moyeu et l'arbre de sortie est fixé au châssis s'étendant vers l'avant dans le moyeu.

8. Un procédé selon la revendication 7, dans lequel une extrémité distale du châssis s'étendant a une région de couplage pour le verrouillage avec une région de couplage de l'arbre de sortie.

9. Un procédé selon la revendication 5 ou revendication 8, dans lequel la région de couplage du châssis est usinée dans le châssis.

10. Un procédé d'installation d'une pale dans une éolienne à entraînement direct comprenant un générateur avec un rotor de générateur et un stator de générateur disposé dans une nacelle d'éolienne, un rotor d'éolienne ayant un moyeu monté à rotation sur un châssis s'étendant vers l'avant dans le moyeu et comprenant le procédé faire pivoter le moyeu autour de son axe de rotation dans une position prédéterminée moyennant un procédé selon l'une quelconque des revendications 1 - 9.

11. Un procédé selon la revendication 10, dans lequel la position prédéterminée correspond à une position dans laquelle une pale peut être montée de façon essentiellement horizontale.

12. Un rotor d'éolienne pour une éolienne à entraînement direct comprenant un moyeu monté à rotation sur un châssis s'étendant vers l'avant dans le moyeu et une pluralité de pales, dans lequel une extrémité distale du châssis s'étendant vers l'avant dans le moyeu comprend un couplage en forme d'engrenage usiné approprié pour mettre à exécution le procédé de l'une quelconque des revendications 1 - 11.

13. Une éolienne à entraînement direct comprenant un rotor d'éolienne selon la revendication 12.
